# EUROPÄISCHE PATENTSCHRIFT

(11) **EP 3 871 293 B1**
(45) Veröffentlichungstag und Bekanntmachung des Hinweises auf die Patenterteilung: **10.04.2024**
(21) Anmeldenummer: 20724458.3
(22) Anmeldetag: 05.05.2020
(51) Int. Cl.: H01R 13/03, C22C 5/02, B32B 15/01, C22C 5/04, C22C 9/00, C22C 9/04, C22C 19/03, C22C 19/05, C23C 28/02

(54) **ELEKTRISCHES KONTAKTELEMENT**
ELECTRICAL CONTACT ELEMENT
ÉLÉMENT DE CONTACT ÉLECTRIQUE

(30) Priorität: 05.06.2019 DE 102019115239
(43) Veröffentlichungstag der Anmeldung: 01.09.2021
(73) Patentinhaber: Erni International AG, 8306 Brüttisellen (CH)
(72) Erfinder: BURGER, Michael, 75181 Pforzheim (DE)
(74) Vertreter: Jakelski & Althoff Patentanwälte PartG mbB
(86) Internationale Anmeldenummer: PCT/EP2020/062402
(87) Internationale Veröffentlichungsnummer: WO 2020/244865

(56) Entgegenhaltungen:
- JP-A- H0 711 478
- JP-A- H10 233 121
- JP-A- 2017 078 194
- US-A1- 2004 038 072

## Beschreibung

Die vorliegende Erfindung betrifft ein elektrisches Kontaktelement für einen Steckverbinder.

### Stand der Technik

Elektrische Steckverbinder weisen in der Regel ein oder mehrere elektrische Kontaktelemente und ein oder mehrere Isolierkörper auf. Die Kontaktelemente sind dabei üblicherweise als Messerelemente oder als Federelemente ausgeführt. Diese werden aus Grundwerkstoffen hergestellt, die nicht resistent gegen Korrosion sind. Oft handelt es sich hierbei um Kupferlegierungen. Um die Funktion der Kontaktelemente über die Lebensdauer des Steckverbinders zu gewährleisten, werden deshalb dünne Schichten anderer Metalle auf dem Grundwerkstoff aufgebracht. Diese können eine Zwischenschicht und eine Nutzschicht umfassen.

Die Zwischenschicht kann verschiedene Aufgaben haben. Sie kann die Haftung der Nutzschicht auf dem Grundwerkstoff verbessern, einen mechanischen Ausgleich zwischen Grundwerkstoff und Nutzschicht herstellen und verhindern, dass Diffusionsprozesse zwischen der Nutzschicht und dem Grundwerkstoff stattfinden. Die Zwischenschicht besteht häufig aus Kupfer oder Nickel.

Auf der Zwischenschicht befindet sich die Nutzschicht, welche auch als Funktionsschicht bezeichnet wird. Die Nutzschicht verlängert die technisch sinnvolle Nutzungsdauer des Kontaktelements, kann die elektrische Übertragung verbessern und die darunterliegenden Schichten vor Korrosion schützen. Sie kann aus weichen, nicht inerten Metallen wie Zinn oder Silber bestehen. In Steckverbindungen im Automobilbereich ist beispielsweise Silber als Nutzschicht weit verbreitet. In Stecksystemen mit besonders hohen Anforderungen an die Zuverlässigkeit und Lebensdauer werden oft auch Nutzschichten aus sehr teuren, korrosionsbeständigen Edelmetallen oder deren Legierungen eingesetzt. So finden beispielsweise Gold-Cobalt-Legierungen oder Palladium-Nickel-Legierungen Verwendung.

Die JP 2017-78194 A beschreibt ein elektrisches Kontaktelement, das auf einem Grundkörper aus Kupfer eine Zwischenschicht aus Nickel und eine Nutzschicht aus Ruthenium aufweist. Zwischen der Zwischenschicht und der Nutzschicht ist eine weitere Schicht aufgebracht, die aus einer Nickel-Wolfram-Legierung oder aus einer Zinn-Nickel-Legierung besteht.

In der US 2004/038072 A1 wird ein elektrisches Kontaktelement beschrieben, das auf einem Grundkörper aus Messing vier Metallschichten aufweist. Die erste Schicht besteht aus Kupfer, die zweite Schicht besteht aus Nickel, die dritte Schicht besteht aus Ruthenium und die vierte Schicht besteht aus Gold.

Es ist eine Aufgabe der vorliegenden Erfindung ein elektrisches Kontaktelement bereitzustellen, das für die Verwendung in einem elektrischen Steckverbinder geeignet ist und kostengünstiger hergestellt werden kann als herkömmliche elektrische Kontaktelemente. Dabei soll dennoch die Zuverlässigkeit und Lebensdauer herkömmlicher elektrischer Kontaktelemente erreicht werden.

### Offenbarung der Erfindung

Diese Aufgabe wird durch ein elektrisches Kontaktelement für einen Steckverbinder gelöst, das einen metallischen Grundkörper oder eine auf dem Grundkörper aufgebrachte Nutzschicht aufweist. Die Nutzschicht kann dabei unmittelbar auf dem metallischen Grundkörper aufgebracht sein oder es können eine oder mehrere weitere Schichten zwischen dem metallischen Grundkörper und der Nutzschicht angeordnet sein. Die Nutzschicht besteht aus den folgenden Legierungselementen: 50 bis 100 Gew.-% Ruthenium, 0 bis 30 Gew.-% Nickel, 0 bis 20 Gew.-% Chrom, 0 bis 20 Gew.-% Cobalt, 0 bis 20 Gew.-% Platin und 0 bis 1 Gew.-% weitere Legierungselemente. Dabei beträgt die Summe der Legierungselemente 100 Gew.-%. Die Nutzschicht kann also sowohl aus reinem Ruthenium bestehen als auch aus einer Ruthenium-Legierung, die bis zu 50 % weitere Legierungselemente enthalten kann. Während Nickel, Chrom, Cobalt und Platin in den angegebenen Anteilen zulegiert werden können, werden Anteile weiterer Elemente vorzugsweise vermieden. Ein Anteil von bis zu 1 Gew.-% weiterer Legierungselemente an der Legierung, beispielsweise als Verunreinigungen, sind jedoch akzeptabel. In einer Ausführungsform des elektrischen Kontaktelements, in der die Nutzschicht im Wesentlichen aus reinem Ruthenium besteht, enthält diese 99 bis 100 Gew.-% und maximal 1 Gew.-% weiterer Legierungselemente, wobei die Summe der Legierungselemente wiederum 100 Gew.-% beträgt. Erfindungsgemäß wurde gefunden, dass die Verwendung einer derartigen Nutzschicht eine ähnlich gute elektrische Übertragung und einen ähnlich guten Korrosionsschutz bietet wie sie beispielsweise mit der Nutzschicht aus Silber erzielt werden kann. Dabei ermöglicht die Verwendung von reinem Ruthenium oder der beschriebenen Ruthenium-Legierung jedoch eine im Vergleich hierzu kostengünstigere Herstellung des elektrischen Kontaktelements.

Um einen guten Korrosionsschutz zu gewährleisten, ist es bevorzugt, dass die Nutzschicht eine Dicke im Bereich von 0,15 µm bis 1,50 µm aufweist. Besonders bevorzugt liegt die Dicke im Bereich von 0,30 µm bis 1,00 µm. Die erfindungsgemäß verwendete Nutzschicht bietet einen so guten Korrosionsschutz und eine so gute elektrische Übertragung, dass sich diese Eigenschaften durch eine weitere Erhöhung der Schichtdicke nicht mehr wesentlich verbessern ließen. Hingegen ist beispielsweise bei Verwendung einer herkömmlichen Nutzschicht aus Silber üblicherweise eine Schichtdicke von mindestens 3 µm erforderlich, damit das elektrische Kontaktelement überhaupt die gestellten Anforderungen an Korrosionsbeständigkeit und elektrischer Übertragung erfüllt. Die Erfindung ermöglicht demnach nicht nur die Herstellung des elektrischen Kontaktelements unter Verwendung kostengünstigerer Materialien, sondern auch eine Einsparung der Materialmenge durch Verwendung einer besonders dünnen Nutzschicht.

Zwischen dem Grundkörper und der Nutzschicht ist eine metallische Zwischenschicht angeordnet. Bevorzugt handelt es sich bei der Zwischenschicht um die einzige Schicht, die zwischen der Nutzschicht und dem Grundkörper angeordnet ist, sodass der Grundkörper unmittelbar mit der Zwischenschicht verbunden ist und die Zwischenschicht unmittelbar mit der Nutzschicht verbunden ist. Wie im herkömmlichen Aufbau des elektrischen Kontaktelements, verbessert die Zwischenschicht die Haftung der Nutzschicht auf dem Grundkörper, sorgt für einen mechanischen Ausgleich zwischen dem Grundkörper und der Nutzschicht und verhindert Diffusionsprozesse zwischen der Nutzschicht und dem Grundkörper.

In einer Ausführungsform des Kontaktelements enthält die Zwischenschicht 99 bis 100 Gew.-% Kupfer und 0 bis 1 Gew.-% weitere Legierungselemente. In einer anderen bevorzugten Ausführungsform des Kontaktelements enthält die Zwischenschicht 99 bis 100 Gew.-% Nickel und 0 bis 1 Gew.-% weitere Legierungselemente. Die Summe der Legierungselemente beträgt dabei 100 Gew.-%. Der Anteil der weiteren Legierungselemente sollte vorzugsweise möglichst gering sein, jedoch kann deren Vorliegen aufgrund von Verunreinigungen gegebenenfalls nicht völlig ausgeschlossen werden.

Die Dicke der Zwischenschicht beträgt 1,5 µm bis 4,0 µm und bevorzugt 2,0 µm bis 3,0 µm.

Weiterhin ist auf der Nutzschicht entweder eine metallische und organische Gleitschicht oder eine organische Gleitschicht angeordnet. Die Gleitschicht kann zum einen die Gleiteigenschaften von elektrischen Kontaktelementen, insbesondere von Federelementen auf Messerelementen, verbessern. Dadurch trägt sie dazu bei, dass die Nutzschicht unter mechanischer Reibbeanspruchung länger funktional bleibt. Zum anderen kann sie auch die elektrische Übertragung zwischen den elektrischen Kontaktelementen optimieren. Wenn die Gleitschicht sowohl metallische als auch organische Komponenten enthält, dann ist es bevorzugt, dass eine metallische Teilschicht unmittelbar auf der Nutzschicht aufgebracht ist und auf dieser metallischen Teilschicht eine organische Teilschicht aufgebracht ist. Die metallische Teilschicht und die organische Teilschicht bilden dann gemeinsam die Gleitschicht.

Ein besonders geeignetes metallisches Material für die Gleitschicht ist reines Gold oder eine Goldlegierung, die aus den folgenden Legierungselementen besteht: 98,5 bis 100,0 Gew.-% Gold, 0 bis 0,5 Gew.-% Cobalt und 0 bis 1,0 Gew.-% weitere Legierungselemente. Die Summe der Legierungselemente beträgt dabei 100 Gew.-%.

Besonders geeignete organische Materialien der Gleitschicht sind mindestens ein Fluorpolymer und/oder mindestens ein Fettsäuresalz. Bei dem Fluorpolymer kann es sich beispielsweise um einen Perfluorpolyether (PFPE) oder um Polytetrafluorethylen (PTFE) handeln. Das Fettsäuresalz kann beispielsweise Lithium-12-Hydroxystearat sein.

Die Dicke der Gleitschicht liegt vorzugsweise im Bereich von 0,05 µm bis 0,25 µm. Bereits derart dünne Gleitschichten sind ausreichend, um dem elektrischen Kontaktelement gute Gleiteigenschaften zu verleihen, sodass durch das Aufbringen der Gleitschicht auf die Nutzschicht keine wesentliche Dickenerhöhung der gesamten Beschichtung erfolgt.

Die Nutzschicht des erfindungsgemäßen elektrischen Kontaktelements kann besonders vorteilhaft dann eingesetzt werden, wenn der Grundkörper aus Kupfer, einer niedrig legierten Kupferlegierung oder Messing besteht. Er besteht in diesem Falle aus den folgenden Legierungselementen: 50 bis 100 Gew.-% Kupfer, 0 bis 45 Gew.-% Zink und 0 bis 5 Gew.-% weiterer Legierungselemente. Die Summe der Legierungselemente beträgt hierbei 100 Gew.-%. Auch wenn die Summe der weiteren Legierungselemente hierin bis zu 5 Gew.-% betragen kann, ist es bevorzugt, dass jedes einzelne weitere Legierungselement nicht mehr als 2 Gew.-% der gesamten Legierung ausmacht. Weiterhin ist es bevorzugt, dass lediglich die weiteren Legierungselemente Beryllium, Chrom, Eisen, Kobalt, Magnesium, Mangan, Nickel, Phosphor, Schwefel, Silber, Silizium, Tellur, Titan, Zinn und Zirkonium zu jeweils bis zu 2 Gew.-% in der Legierung enthalten sein dürfen und alle nicht in dieser Liste genannten weiteren Legierungselemente zu jeweils maximal 1 Gew.-% vorliegen.

Das erfindungsgemäße elektrische Kontaktelement kann mit guten technischen Eigenschaften hergestellt werden, ohne hierbei große Mengen teurer Edelmetalle einsetzen zu müssen.

### Kurze Beschreibung der Zeichnungen

Ausführungsbeispiele der Erfindung sind in den Zeichnungen dargestellt und werden in der nachfolgenden Beschreibung näher erläutert.
- Figur 1: zeigt eine schematische Längsschnittdarstellung durch eine Anordnung aus zwei elektrischen Steckverbindern.
- Figur 2: zeigt eine Querschnittsdarstellung eines Kontaktbereichs zwischen zwei elektrischen Kontaktelementen in einem Vergleichsbeispiel.
- Figur 3: zeigt eine Querschnittsdarstellung eines Kontaktbereichs von zwei elektrischen Kontaktelementen gemäß einem Ausführungsbeispiel der Erfindung.

### Ausführungsbeispiele der Erfindung

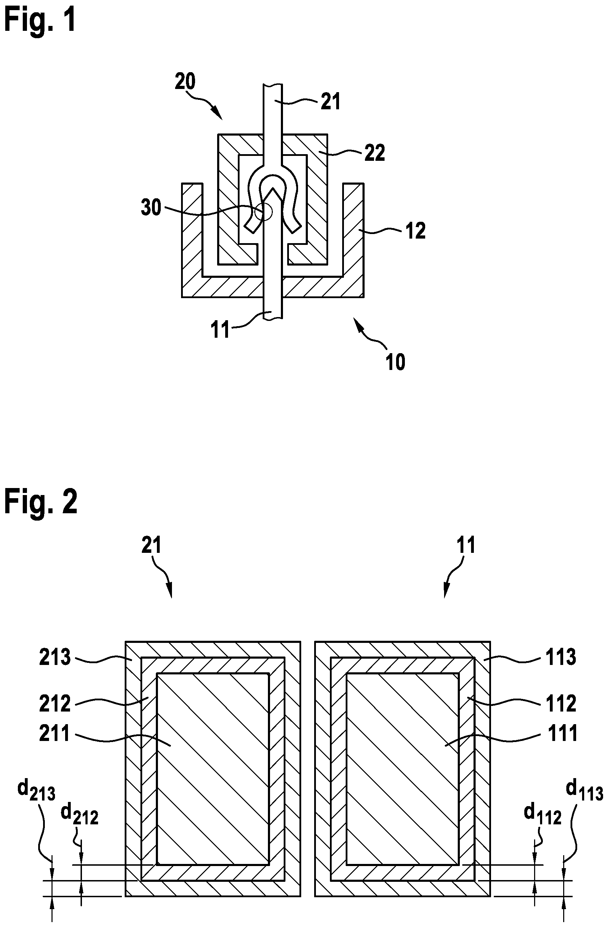

Figur 1 zeigt den schematischen Aufbau eines Steckverbinderpaares. Ein erster Steckverbinder 10 weist ein elektrisches Kontaktelement 11 in Form eines Messerelements auf. Dieses ist von einem ersten Isolationskörper 12 aus einem Kunststoff umgeben. Ein zweiter Steckverbinder 20 weist ein zweites elektrisches Kontaktelement 21 in Form eines Federelements auf. Dieses ist von einem zweiten Isolationskörper 22 aus einem Kunststoff umgeben. Wenn die beiden Steckverbinder 10, 20 in der dargestellten Weise ineinandergesteckt werden, dann wird der zweite Isolationskörper 22 in den ersten Isolationskörper 12 geschoben, wobei das erste elektrische Kontaktelement 11 in das zweite elektrische Kontaktelement 21 hineingleitet. Dabei biegt es die Federn des zweiten Kontaktelements 21 auseinander, die dann durch ihre Federkraft fest auf das erste Kontaktelement 11 gepresst werden. In einem Kontaktbereich 30, in dem die beiden Kontaktelemente 11, 21 sich kontaktieren, ist dann eine elektrische Übertragung möglich.

In elektrischen Steckverbindern 10, 20, die Kontaktelemente 11, 21 gemäß dem Stand der Technik aufweisen, liegt der in Figur 2 dargestellte Aufbau der Kontaktelemente 11, 21 im Kontaktbereich 30 vor. Das erste Kontaktelement 11 weist einen Grundkörper 111, eine auf dem Grundkörper angeordnete Zwischenschicht 112 und eine auf der Zwischenschicht angeordnete Nutzschicht 113 auf. Das zweite Kontaktelement 21 weist einen Grundkörper 211, eine auf dem Grundkörper 211 angeordnete Zwischenschicht 212 und eine auf der Zwischenschicht 212 angeordnete Nutzschicht 213 auf. Die Grundkörper 111, 211, die Zwischenschichten 112, 212 und die Nutzschichten 113, 213 weisen jeweils die in Tabelle 1 genannte Zusammensetzung in Gewichtsprozent auf:

**Tabelle 1**

| | | **Grundkörper** | **Zwischenschicht** | **Nutzschicht** |
|---|---|---|---|---|
| | | **111,211** | **112, 212** | **113, 213** |
| | | | | |
| **Ag** | | | | 100 |
| **Cu** | | 100 | | |
| **Ni** | | | 100 | |
| **Ru** | | | | |
| **PTFE** | | | | |

Im vorliegenden Beispiel weisen die Zwischenschichten 112, 212 jeweils eine Dicke d₁₁₂, d₂₁₂ von 3 µm auf und die Nutzschichten 113, 213 weisen jeweils eine Dicke d₁₁₃, d₂₁₃ von 4 µm auf. Die Nutzschichten 113, 213 berühren sich im Kontaktbereich 30, wobei es zu einem Abrieb von Silber kommen kann. Die große Menge an Silber, die für die Herstellung der Nutzschichten benötigt wird, führt dazu, dass die Herstellung der elektrischen Kontaktelemente 11, 21 teuer ist.

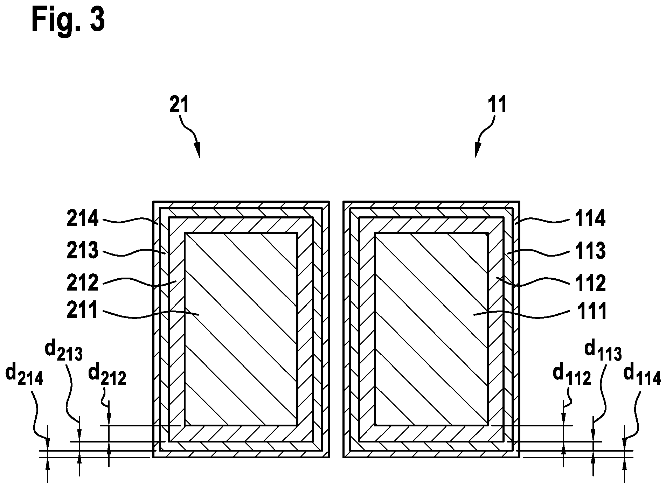

Figur 3 zeigt den Aufbau der elektrischen Kontaktelemente 11, 21 gemäß mehreren Ausführungsbeispielen der Erfindung, die in dem Paar der Steckverbinder 10, 20 gemäß Figur 1 verwendet werden können. Zusätzlich zu dem bereits in Figur 2 dargestellten Aufbau der elektrischen Kontaktelemente 11, 21 aus Grundkörpern 111, 211, Zwischenschichten 112, 212 und Nutzschichten 113, 213 weisen die Kontaktelemente 11, 21 gemäß diesen Ausführungsbeispielen der Erfindung auf ihren Nutzschichten 113, 213 jeweils noch eine Gleitschicht 114, 214 auf. Dies führt dazu, dass im Kontaktbereich 30 keine Kontaktierung der Nutzschichten 113, 213, sondern eine Kontaktierung der Gleitschichten 114, 214 vorliegt. Während die Dicke der Zwischenschichten 112, 212 in den Ausführungsbeispielen der Erfindung mit der Dicke der Zwischenschichten 112, 212 in dem Vergleichsbeispiel übereinstimmt, kommen die erfindungsgemäßen Ausführungsbeispiele mit wesentlich dünneren Nutzschichten 113, 213 aus, deren Dicke d₁₁₃, d₂₁₃ jeweils nur 0,65 µm beträgt. Dies führt zu einer erheblichen Materialeinsparung gegenüber dem Vergleichsbeispiel. Die Gleitschichten 114, 214 weisen in den erfindungsgemäßen Ausführungsbeispielen jeweils eine Dicke d₁₁₄, d₂₁₄ von 0,10 µm auf. Jede Nutzschicht 113, 213 ist also selbst zusammen mit ihren jeweiligen Gleitschicht 114, 214 dünner als die Nutzschicht 113, 213 im Vergleichsbeispiel.

In einem Ausführungsbeispiel der Erfindung weisen die Komponenten der Kontaktelemente 11, 21 die in Tabelle 2 aufgeführte Zusammensetzung in Gewichtsprozent auf.

Die Nutzschicht 113, 213, die im Vergleichsbeispiel aus reinem Silber besteht, wurde im Ausführungsbeispiel durch eine Ruthenium-Nickel-Legierung ersetzt. Es wurde festgestellt, dass auch unter Verwendung einer solchen Legierung die Eigenschaften der elektrischen Kontaktelemente gemäß dem Vergleichsbeispiel hinsichtlich Korrosionsbeständigkeit und elektrischer Übertragung immer noch erreicht oder sogar übertroffen werden können.

**Tabelle 2**

| | | **Grundkörper** | **Zwischenschicht** | **Nutzschicht** | **Gleitschicht** |
|---|---|---|---|---|---|
| | | **111,211** | **112, 212** | **113,213** | **114, 214** |
| | | | | | |
| **Ag** | | | | | |
| **Cu** | | 100 | | | |
| **Ni** | | | 100 | 10 | |
| **Ru** | | | | 90 | |
| **PTFE** | | | | | 100 |

Die Gleitschichten 114, 214 sind organische Gleitschichten, die jeweils aus PTFE bestehen. Es wurde festgestellt, dass unter Verzicht auf ein teures Edelmetall im dritten Ausführungsbeispiel dennoch hervorragende Gleiteigenschaften der Kontaktelemente 11, 21 erzielt werden können, wobei die elektrische Übertragung dennoch nicht schlechter ist als jene der elektrischen Kontaktelemente 11, 21 im Vergleichsbeispiel.

Das Ausführungsbeispiel der elektrischen Kontaktelemente 11, 21 gemäß der Erfindung ermöglichen einen kostengünstigen Ersatz der elektrischen Kontaktelemente 11, 21 gemäß dem Vergleichsbeispiel, ohne dass dies zu einer Beeinträchtigung der für die Kontaktelemente 11, 21 relevanten Eigenschaften führen würde.

## Patentansprüche

1. Elektrisches Kontaktelement (11, 21) für einen Steckverbinder (10, 20), aufweisend einen metallischen Grundkörper (111, 211), eine auf dem Grundkörper (111, 211) aufgebrachte metallische Zwischenschicht (112, 212), welche eine Dicke (d₁₁₂, d₂₁₂) im Bereich von 1,5 µm bis 4,0 µm aufweist, und eine auf der Zwischenschicht (112, 212) aufgebrachte Nutzschicht (113, 213), wobei die Nutzschicht (113, 213) aus den folgenden Legierungselementen besteht:
| | |
|---|---|
| 50 - 100 Gew.-% | Ruthenium |
| 0 - 30 Gew.-% | Nickel |
| 0 - 20 Gew.-% | Chrom |
| 0 - 20 Gew.-% | Cobalt |
| 0 - 20 Gew.-% | Platin |
| 0 - 1 Gew.-% | weitere Legierungselemente |
wobei die Summe der Legierungselemente 100 Gew.-% beträgt, **dadurch gekennzeichnet, dass** auf der Nutzschicht (113, 213) entweder eine metallische und organische Gleitschicht (114, 214) oder eine organische Gleitschicht (114, 214) angeordnet ist.

2. Elektrisches Kontaktelement (11, 21) nach Anspruch 1, **dadurch gekennzeichnet, dass** die Nutzschicht (113, 213) eine Dicke (d₁₁₃, d₂₁₃) im Bereich von 0,15 µm bis 1,50 µm aufweist.

3. Elektrisches Kontaktelement (11, 21) nach Anspruch 1 oder 2, **dadurch gekennzeichnet, dass** die Zwischenschicht (112, 212) aus den folgenden Legierungselementen besteht:
| | |
|---|---|
| 99 - 100 Gew.-% | Kupfer oder Nickel |
| 0 - 1 Gew.-% | weitere Legierungselemente |
wobei die Summe der Legierungselemente 100 Gew.-% beträgt.

4. Elektrisches Kontaktelement (11, 21) nach einem der Ansprüche 1 bis 3, **dadurch gekennzeichnet, dass** die Gleitschicht (114, 214) eine Legierung enthält, die aus den folgenden Legierungselementen besteht:
| | |
|---|---|
| 98,5 - 100,0 Gew.-% | Gold |
| 0 - 0,5 Gew.-% | Cobalt |
| 0 - 1,0 Gew.-% | weitere Legierungselemente |
wobei die Summe der Legierungselemente 100 Gew.-% beträgt.

5. Elektrisches Kontaktelement (11, 21) nach einem der Ansprüche 1 bis 4, **dadurch gekennzeichnet, dass** die Gleitschicht (114, 214) mindestens ein Fluorpolymer und/oder mindestens ein Fettsäuresalz enthält.

6. Elektrisches Kontaktelement (11, 21) nach einem der Ansprüche 1 bis 5, **dadurch gekennzeichnet, dass** die Gleitschicht (114, 214) eine Dicke (d₁₁₄, d₂₁₄) im Bereich von 0,05 µm bis 0,25 µm aufweist.

7. Elektrisches Kontaktelement (11, 21) nach einem der Ansprüche 1 bis 6, **dadurch gekennzeichnet, dass** der Grundkörper (111, 211) aus den folgenden Legierungselementen besteht:
| | |
|---|---|
| 50 - 100 Gew.-% | Kupfer |
| 0 - 45 Gew.-% | Zink |
| 0 - 5 Gew.-% | weitere Legierungselemente |
wobei die Summe der Legierungselemente 100 Gew.-% beträgt.

## Claims

1. Electrical contact element (11, 21) for a plug-in connector (10, 20), having a metallic base body (111, 211), a metallic intermediary layer (112, 212) applied to the base body (111, 211), which has a thickness (d₁₁₂, d₂₁₂) ranging from 1.5 µm to 4.0 µm, and a wear layer (113, 213) applied to the intermediate layer (112, 212), wherein the wear layer (113, 213) consists of the following alloy elements:
| | |
|---|---|
| 50 - 100 % w/w | ruthenium |
| 0 - 30 % w/w | nickel |
| 0 - 20 % w/w | chromium |
| 0 - 20 % w/w | cobalt |
| 0 - 20 % w/w | platinum |
| 0 - 1 % w/w | further alloy elements, |
wherein the sum of the alloy elements is 100 % w/w, **characterised in that** either a metallic and organic slide layer (114, 214) or an organic slide layer (114, 214) is arranged on the wear layer (113, 213).

2. Electrical contact element (11, 21) according to claim 1, **characterised in that** the wear layer (113, 213) has a thickness (d₁₁₃, d₂₁₃) ranging from 0.15 µm to 1.50 µm.

3. Electrical contact element (11, 21) according to claim 1 or 2, **characterised in that** the intermediary layer (112, 212) consists of the following alloy elements:
| | |
|---|---|
| 99 - 100 % w/w | copper or nickel |
| 0 - 1 % w/w | further alloy elements, |
wherein the sum of the alloy elements is 100 % w/w.

4. Electrical contact element (11, 21) according to one of claims 1 to 3, **characterised in that** the slide layer (114, 214) contains an alloy which consists of the following alloy elements:
| | |
|---|---|
| 98.5 - 100.0 % w/w | gold |
| 0 - 0.5 % w/w | cobalt |
| 0 - 1.0 % w/w | further alloy elements, |
wherein the sum of the alloy elements is 100 % w/w.

5. Electrical contact element (11, 21) according to one of claims 1 to 4, **characterised in that** the slide layer (114, 214) contains at least one fluoropolymer and/or at least one fatty acid salt.

6. Electrical contact element (11, 21) according to one of claims 1 to 5, **characterised in that** the slide layer (114, 214) has a thickness (d₁₁₄, d₂₁₄) ranging from 0.05 µm to 0.25 µm.

7. Electrical contact element (11, 21) according to one of claims 1 to 6, **characterised in that** the base body (111, 211) consists of the following alloy elements:
| | |
|---|---|
| 50 - 100 % w/w | copper |
| 0 - 45 % w/w | zinc |
| 0 - 5 % w/w | further alloy elements, |
wherein the sum of the alloy elements is 100 % w/w.

## Revendications

1. Élément de contact électrique (11, 21) pour un connecteur enfichable (10, 20), présentant un corps de base (111, 211) métallique, une couche intermédiaire (112, 212) métallique appliquée sur le corps de base (111, 211) et dont l'épaisseur (d₁₁₂, d₂₁₂) est comprise dans la plage de 1,5 µm à 4,0 µm, et une couche d'usure (113, 213) appliquée sur la couche intermédiaire (112, 212), la couche d'usure (113, 213) étant constituée des éléments d'alliage suivants:
| | |
|---|---|
| 50 à 100 % en poids | de ruthénium |
| 0 à 30 % en poids | de nickel |
| 0 à 20 % en poids | de chrome |
| 0 à 20 % en poids | de cobalt |
| 0 à 20 % en poids | de platine |
| 0 à 1 % en poids | d'autres éléments d'alliage |
lesdits éléments d'alliage totalisant 100 % en poids, **caractérisé en ce que** soit une couche de glissement métallique et organique (114, 214), soit une couche de glissement organique (114, 214) est disposée sur la couche d'usure (113, 213).

2. Élément de contact électrique (11, 21) selon la revendication 1, **caractérisé en ce que** la couche d'usure (113, 213) a une épaisseur (d₁₁₃, d₂₁₃) comprise dans la plage de 0,15 µm à 1,50 µm.

3. Élément de contact électrique (11, 21) selon la revendication 1 ou 2, **caractérisé en ce que** la couche intermédiaire (112, 212) est constituée des éléments d'alliage suivants:
| | |
|---|---|
| 99 à 100 % en poids | de cuivre ou de nickel |
| 0 à 1 % en poids | d'autres éléments d'alliage |
lesdits éléments d'alliage totalisant 100 % en poids.

4. Élément de contact électrique (11, 21) selon l'une des revendications 1 à 3, **caractérisé en ce que** la couche de glissement (114, 214) contient un alliage qui est constitué des éléments d'alliage suivants:
| | |
|---|---|
| 98,5 à 100,0 % en poids | d'or |
| 0 à 0,5 % en poids | de cobalt |
| 0 à 1,0 % en poids | d'autres éléments d'alliage |
lesdits éléments d'alliage totalisant 100 % en poids.

5. Élément de contact électrique (11, 21) selon l'une des revendications 1 à 4, **caractérisé en ce que** la couche glissante (114, 214) contient au moins un polymère fluoré et/ou au moins un sel d'acide gras.

6. Élément de contact électrique (11, 21) selon l'une des revendications 1 à 5, **caractérisé en ce que** la couche de glissement (114, 214) a une épaisseur (d₁₁₄, d₂₁₄) comprise dans la plage de 0,05 µm à 0,25 µm.

7. Élément de contact électrique (11, 21) selon l'une des revendications 1 à 6, **caractérisé en ce que** le corps de base (111, 211) est constitué des éléments d'alliage suivants:
| | |
|---|---|
| 50 à 100 % en poids | de cuivre |
| 0 à 45 % en poids | de zinc |
| 0 à 5 % en poids | d'autres éléments d'alliage |
lesdits éléments d'alliage totalisant 100 % en poids.
